# EUROPEAN PATENT SPECIFICATION

(11) **EP 2 785 469 B1**
(45) Date of publication and mention of the grant of the patent: **04.04.2018**
(21) Application number: 11876849.8
(22) Date of filing: 28.11.2011
(51) Int. Cl.: B05D 1/36, C09D 5/08

(54) **DRY-IN-PLACE CORROSION-RESISTANT COATING FOR ZINC OR ZINC-ALLOY COATED SUBSTRATES**
IN SITU TROCKNENDE KORROSIONSFESTE BESCHICHTUNG FÜR MIT ZINK ODER EINER ZINKLEGIERUNG BESCHICHTETE SUBSTRATE
REVÊTEMENT RÉSISTANT À LA CORROSION SÉCHANT SUR PLACE POUR DES SUBSTRATS REVÊTUS DE ZINC OU D'ALLIAGE DE ZINC

(43) Date of publication of application: 08.10.2014
(73) Proprietor: Eco-Green Coatings L.L.C., Gary, IN 46404 (US)
(72) Inventor: KRIPPES, William D., Howell, Michigan 48885 (US); JAROSZ, Theodore, Homer Glen, Illinois 60491 (US); SERAFINI, Mike, Homer Glen, Illinois 60491 (US); CAPIZZANO, William, Palatine, Illinois 60067 (US)
(74) Representative: Grünecker Patent- und Rechtsanwälte PartG mbB
(86) International application number: PCT/US2011/062214
(87) International publication number: WO 2013/081574

(56) References cited:
- CN-A- 103 483 991
- US-A- 3 642 541
- US-A- 4 659 394
- US-A- 5 415 702
- US-A1- 2001 001 965
- US-A1- 2009 087 674
- DATABASE CA [Online] CHEMICAL ABSTRACTS SERVICE, COLUMBUS, OHIO, US; ATAYA, TAKESHI ET AL: "Blackening solution for zinc or zinc alloy", XP002740943, retrieved from STN Database accession no. 1989:80415 & JP S63 161176 A (NIPPON KOKAN K. K., JAPAN; NIHON PARKERIZING CO., LTD.) 4 July 1988 (1988-07-04)
- DATABASE CA [Online] CHEMICAL ABSTRACTS SERVICE, COLUMBUS, OHIO, US; ATAYA, TAKESHI ET AL: "Formation of black coating on zinc- or zinc alloy-plated steels", XP002740944, retrieved from STN Database accession no. 1988:496912 & JP S63 35784 A (NIPPON KOKAN K. K., JAPAN; NIHON PARKERIZING CO., LTD.) 16 February 1988 (1988-02-16)

## Description

### BACKGROUND AND SUMMARY

This invention relates to a process for making a corrosion-resistant coating for zinc or zinc-alloy coated substrates meeting the American Society of Testing and Materials International ASTM B117-11 (hereinafter ASTM B117) standard, as last amended in August 2011, for continuous salt spray tests of metals and coated metals.

It is well known that steel rusts when left unprotected in almost any environment. Applying a thin coating of zinc to steel is an effective and economical way to protect steel from corrosion. The most common form of galvanizing metal substrates, either iron, steel or aluminum, is hot-dip galvanizing in which a thick robust layer is deposited on the surface of the metal substrate. The metal substrate is immersed in a bath of molten zinc, at a temperature of about (850°F) 460°C, to form a metallurgically bonded zinc coating on the metal substrate. The resulting coated metal substrate can be used in much the same way as an uncoated metal substrate. Coils of steel strip, for example, may be hot-dip galvanized in a continuous line, immersing the steel strip in a molten zinc bath at speeds of up to 18288 cm per minute (600 feet per minute). The specified coating thickness is controlled by air "knives" which remove the excess coating deposited on the steel as it exits the molten zinc bath. Galvanized steel is used in applications requiring the strength of steel combined with the corrosion resistance of zinc. The continuous galvanizing process can apply a number of different coatings that vary in thickness, appearance, and alloy composition. The term "galvanized" refers to the standard continuous coating having the primary component being zinc. About 0.2% aluminum may be added to the galvanizing bath to form a thin, inhibiting iron-aluminum layer on the steel surface that ensures formation of the zinc coating. The finished zinc or zinc-alloy coating has good formability and corrosion resistance, and provides excellent sacrificial protection. In some applications, the zinc or zinc-alloy coating is applied in conjunction with annealing of the metal substrate, as explained below. These products are often referred to as being galvannealed.

Other processes to galvanize metal substrates include electrodeposition galvanization, otherwise known as Electrogalvanization, thermal diffusion galvanizing, and galvannealing. Electrogalvanization comprises immersing a steel substrate in a zinc and saline solution with a zinc anode, the steel substrate acting as the conductor. When electricity
is passed through circuit a zinc coating is deposited onto the surface of the steel substrate. In thermal diffusion galvanizing, the metal substrate is tumbled with a mixture of zinc powder and accelerator chemicals, generally sand, and heated to slightly below the melting point of zinc. Galvanealled metal substrate results from the combined processes of galvanizing and annealing to produce specialized sheets of steel. To form galvanneal, steel is subjected to the hot-dip galvanizing process to form a zinc-coated steel with a very fine grayish matte finish. The coated steel is then heated, to above the recrystallization temperature, maintained at a suitable temperature for a period of time, and then cooled. The heating and cooling alter the properties of the steel, such as strength and ductility. The zinc coating of galvanneal does not flake off when formed, stamped, and bent. Furthermore, the very fine matte finish acts as a primer, allowing paint to adhere more easily, while affording rust protection. These properties make galvanneal a popular choice in the automotive, signage and electrical equipment industries.

Zinc coatings protect steel by providing a physical barrier as well as cathodic protection to the underlying steel. The main mechanism by which galvanized coatings protect steel is by providing an impervious barrier that does not allow moisture to contact the steel. Without moisture (the necessary electrolyte), there is no corrosion. When base steel is exposed, e.g., by cutting, scratching or abrading, the exposed steel is still protected by the sacrificial corrosion of the zinc coating adjacent to the exposed steel. This is because zinc is more electronegative (more reactive) than steel in the galvanic series, causing the zinc to oxidize before the steel. Zinc acting as a sacrificial anode is an advantage absent from paint, enamel, powder coatings and other corrosion preventative methods. However, zinc is a reactive metal and will continually corrode slowly over time, eventually losing its protective qualities. Furthermore, in many applications, after a metal substrate has been galvanized the metal substrate is reduced, usually by cold-rolling, but also by hot-rolling, cutting, or abrading, to desired dimensions, reducing the thickness of the zinc-coating and therefore the effectiveness of the corrosion-resistance provided by the zinc-coating. For this reason, there is a need for a corrosion-resistant coating that provides enhanced corrosion protection for zinc or zinc-alloy coated substrates, even when the coated metal substrate having a zinc or zinc-alloy surface has been reduced.

The process herein described may be applicable not only to galvanized steel, but also to galvannealed carbon steel, which is steel which has been coated with zinc by a hot-dipped process, which converts the coating into a zinc-iron alloy, and subsequently annealed. Conversion to this alloy results in a non-spangle matte finish which makes the sheet suitable for painting after fabrication. Additionally, the present process may be applicable to steel which has been subjected to a galvalume® process, in which carbon steel sheet is coated with an aluminum-zinc alloy by a continuous hot-dipped process. The nominal coating composition is about 55% aluminum and 45% zinc optionally plus a small addition of silicon (added to at least improve coating adhesion to the steel substrate). This process may be applicable to any form of galvanized metal substrate, including galvalume® coatings.

The ability of a zinc coating to protect steel depends on zinc's corrosion rate. Freshly exposed galvanized steel reacts with the surrounding atmosphere to form a series of zinc corrosion products (e.g. "white rust" or "red rust"). In air, newly exposed zinc reacts with oxygen to form a very thin zinc oxide layer. When moisture is present, zinc reacts with water resulting in the formation of zinc hydroxide. A common corrosion product to form with exposure to the atmosphere is zinc carbonate as zinc hydroxide reacts with carbon dioxide in the air.

These zinc corrosion products will cause many harmful effects. For example, zinc oxide prevents paint from adhering to the metal as well as accelerates further corrosion of the metal which is unsightly to any galvanized coating's appearance. Pure water contains essentially no dissolved minerals and the zinc will react quickly with pure water to form zinc hydroxide, a bulky white and relatively unstable oxide of zinc. Where freshly galvanized steel is exposed to pure water (e.g., rain, dew or condensation) particularly in an oxygen-deficient environment, the water will continue to react with the zinc and progressively consume the coating. Therefore, a process for making zinc or zinc-alloy corrosion-resistant metal components with not only exponentially enhanced corrosion-resistance, but also with enhanced adhesion to pre-paints is wanted.

Some commercially available compositions have the capacity to passivate galvanized metal substrates, reducing the formation of zinc corrosion products. These passivators usually utilize a dichromate or chromate composition, typically applied through immersion. Most of these commercially available products provide limited protection to corrosion. An untreated surface will show signs of corrosion after 0.5 hours of exposure to a neutral salt spray according to ASTM specification A1003/A1004, and a thin chromate film produced by a dip procedure will usually show signs of corrosion after 12 to 75 hours of exposure to the salt spray environment. There is a need for a corrosion-resistant coating to provide corrosion resistance exceeding 75 hours of exposure to salt spray environment.

The hot-dip coating process produces many hazardous by-products. For example, when a zinc-phosphate coating is applied to a galvanized metal substrate, via spray coating or dip coating, it must be followed by a rinse step to remove any excess coating composition. The zinc-phosphating rinse water must then be treated to remove any hazardous components. The resultant is a sludge, rich in hazardous components which must be disposed of as hazardous waste according to guidelines set forth by the Environmental Protection Agency (EPA). Sludge also forms in the dipping tanks which must be removed and disposed of according to EPA guidelines. Furthermore, the dipping tanks themselves have a finite lifetime and also must be disposed of according to EPA guidelines. Disposal of hazardous waste is very expensive and time consuming. Therefore, there is presently a need for a coating for a galvanized metal substrate which does not produce hazardous waste by-products which require laborious and expensive disposal. Further coated zinc or zinc alloy strips are disclosed in JP S 63 161176 A and JP S 63 35784 A. In said documents the strips may be optionally coated with phosphate, alkali silicate, chromate and/or a polymer. In view of the known coatings, it is an object of the present invention to provide a method with which an improved coating can be generated. Therefore, the present invention provides a process for making a corrosion-resistant metal component coating as defined in claim 1. Further preferred embodiments are defined in the dependent claims 2 to 23 and a corrosion-resistant metal component is defined in claim 24. Moreover, a corrosion resistant metal is provided comprising the inventive coating. The corrosion resistant metal component has the features defined in claim 25; a further preferred embodiment is defined in claim 26.

The presently disclosed corrosion-resistant coating provides enhanced corrosion resistance to the salt spray environment, that may exceed 1,000 hours of protection for metal substrates having a zinc or zinc-alloy surface coating, and over 144 hours for cold-reduced metal substrates having a zinc or zinc-alloy coating. Furthermore, the presently disclosed corrosion-resistant coating provides for a dry-in-place application, negating the requirement for hazardous waste disposal.

Presently disclosed is a process for making a corrosion-resistant metal component comprising the steps of: combining water, at least one zinc phosphate compound and at least one chromium compound to form a first solution; separately combining at least one silicate compound with water to form a second solution; combining the first solution with the second solution such as to form a mixed aqueous solution; combining the mixed aqueous solution with at least one acrylic resin to form a coating mixture; and, applying the coating mixture to a metal substrate having a zinc or zinc-alloy surface to form a coating on the metal substrate, the coating providing chemical resistance for at least 150 hours in accordance with ASTM B117 standards where the zinc or zinc-alloy surface of the metal substrate has a weight of (0.04 oz/ ft²) 12.2g/m².

Also disclosed is a process for making a corrosion-resistant metal component comprising the steps of: combining water, at least one zinc phosphate compound and at least one chromium compound to form a first solution; separately combining at least one silicate compound with water to form a second solution; combining the first solution with the second solution such as to form a coating mixture; and, applying the coating mixture to a metal substrate having a zinc or zinc-alloy surface to form a coating on the metal substrate, the coating providing chemical resistance for at least 150 hours in accordance with ASTM B117
standards where the zinc or zinc-alloy surface of the metal substrate has a weight of (0.04 oz/ ft²) 12.2g/m².

The zinc or zinc-alloy surface may be selected from the group consisting of zinc, zinc alloy, zinc-aluminum alloy, zinc-saline solution, heat-treated zinc-alloy and combination thereof. The coating mixture is capable of reacting with the zinc or zinc-alloy surface of the metal substrate forming a chemical bond with the zinc or zinc-alloy surface. The chromium compound may comprise of a trivalent chromium compound (i.e. chromium (III)). The trivalent chromium compound may be selected from the group consisting of chromium chloride hydrate, chromium (III) potassium sulfate, chromium hydroxide, chromium (III) fluoride, chromium (III) sulfate, chromium (III) sulfide, chromium (III) oxide, chromium (III) 2-ethylhexanoate, chromium (III) nitride, chromium tricarbonyl and mixtures thereof. The chromium compound may also comprise of a hexavalent chromium compound (i.e chromium (VI)). The hexavalent chromium compound may be selected from the group consisting of chromium (VI) halides, hexafluoride, chromyl chloride, sodium chromate, chromium (VI) peroxide, sodium chromate, chromium (VI) oxide, dichromate, potassium chromate, calcium chromate, barium chromate, chromium (VI) oxide peroxide, and mixtures thereof.

Further disclosed is a process for making a corrosion-resistant metal component coating comprising the steps of: combining water, at least one zinc phosphate compound and at least one chromium compound to form a first solution; separately combining at least one silicate compound with water to form a second solution; combining the first solution with the second solution such as to form a mixed aqueous solution; and, combining the mixed aqueous solution with at least one acrylic resin to form a corrosion resistant metal component coating mixture for applying to a metal substrate having a zinc or zinc-alloy surface to form a coating on the metal substrate, the coating providing chemical resistance for at least 150 hours in accordance with ASTM B117 standards where the zinc or zinc-alloy surface of the metal substrate has a weight of (0.04 oz/ ft²)12.20g/m². In other embodiments, the first solution and the second solution may be combined to form a coating mixture and the coating mixture may be applied to a metal substrate having a zinc or zinc-alloy surface to form a coating on the metal substrate, the coating providing chemical resistance for at least 150 hours in accordance with ASTM B117 standards where the zinc or zinc-alloy surface of the metal substrate has a weight of (0.04 oz/ ft²) 12.20g/m².

The coating mixture may be applied in various manners such as by rolling the coating mixture onto the metal component surface, by spraying the coating mixture onto
metal component surface, or by submersing at least a portion of the metal substrate with a zinc or zinc-alloy surface into a bath of the coating mixture.

### BRIEF DESCRIPTION OF THE DRAWINGS

FIG. 1 is a schematic side-view of an apparatus to provide a dry-in-place application of the presently disclosed corrosion-resistant metal component coating, and a heating apparatus to further the reactive process.
FIG. 2 is a photograph of Hot-Dip Galvanized (HDG) G-60 non-chemically treated ("NCT") panels exposed to the salt spray environment for up to 120 hours.
FIG. 3 is a photograph of galvannealed panels coated with a solution of the presently disclosed corrosion-resistant metal component coating comprising chromium (VI), exposed to the salt spray environment for up to 1008 hours.
FIG. 4 is a photograph of uncoated galvannealed panels exposed to the salt spray environment for up to 96 hours.
FIG. 5 is a photograph of galvannealed panels, coated with a solution of the presently disclosed corrosion-resistant metal component coating comprising chromium (VI), exposed to the salt spray environment for up to 1512 hours.
FIG. 6 is a photograph of HDG G-40 (NCT) metal substrate panels exposed to salt spray for up to 144 hours.
FIG. 7 is a photograph of metal substrate panels, having a zinc or zinc-alloy surface, coated with a solution of the presently disclosed corrosion-resistant metal component coating comprising chromium (III), cold-reduced by 15% to 23%, and exposed to the salt spray environment for up to 144 hours.
FIG. 8a is a photograph of the top view of metal substrate panels, having a zinc or zinc-alloy surface, coated with a solution of the presently disclosed corrosion-resistant metal component coating comprising the presently disclosed corrosion-resistant metal component coating comprising chromium (VI) compounds, cold-reduced by 16% to 23%, and exposed to the salt spray environment for up to 120 hours.
FIG. 8b is a photograph of the bottom view of metal substrate panels, having a zinc or zinc-alloy surface, coated with a solution of the presently disclosed corrosion-resistant metal component coating comprising chromium (VI), cold-reduced by 16% to 23%, and exposed to the salt spray environment for up to 120 hours.
FIG. 9a is a photograph of the top view of finished formed studs, having a zinc or zinc-alloy surface, coated with a solution of the presently disclosed corrosion-resistant metal component coating comprising chromium (VI), cold-reduced by 16% to 23%, and exposed to the salt spray environment for up to 120 hours.
FIG. 9b is a photograph of the bottom view of finished formed studs, having a zinc or zinc-alloy surface, coated with a solution of the presently disclosed corrosion-resistant metal component coating comprising chromium (VI), cold-reduced by 16% to 23%, and exposed to salt spray for up to 120 hours.
FIG. 10 is a photograph of uncoated HDG G-40 (NCT) finished formed studs exposed to the salt spray environment for up to 120 hours.
FIG. 11 a is a photograph of the top view of finished formed studs, having a zinc or zinc-alloy surface, coated with a solution of the presently disclosed corrosion-resistant metal component coating comprising chromium (III), cold-reduced by 23% to 24%, and exposed to the salt spray environment for up to 120 hours.
FIG. 11b is a photograph of the bottom view of finished formed studs, having a zinc or zinc-alloy surface, coated with a solution of the presently disclosed corrosion-resistant metal component coating comprising the presently disclosed corrosion-resistant metal component coating comprising chromium (III) compounds, cold-reduced by 23% to 24%, and exposed to the salt spray environment for up to 120 hours.
FIG. 12a is a photograph of the top view of finished formed studs, having a zinc or zinc-alloy surface, coated with a solution of the presently disclosed corrosion-resistant metal component coating comprising chromium (VI), cold-reduced by 23% to 24%, and exposed to the salt spray environment for up to 120 hours.
FIG. 12b is a photograph of the bottom view of finished formed studs, having a zinc or zinc-alloy surface, coated with a solution of the presently disclosed corrosion-resistant metal component coating comprising chromium (VI), cold-reduced by 23% to 24%, and exposed to the salt spray environment for up to 120 hours.
FIG. 13 shows scanning Electron Microscope (SEM) images of the interaction between the presently disclosed corrosion-resistant metal component coating and a zinc or zinc-alloy coated metal substrate surface.
FIG. 14 is a photograph of a metal substrate, having a zinc or zinc-alloy surface, coated with a solution of the presently disclosed corrosion-resistant metal component coating, having water-repellant properties.

Presently disclosed is a process for making a corrosion-resistant coating for zinc or zinc-alloy coated substrates, and for making a corrosion-resistant metal component. Also disclosed is a corrosion-resistant metal component having a corrosion-resistant coating providing chemical resistance.

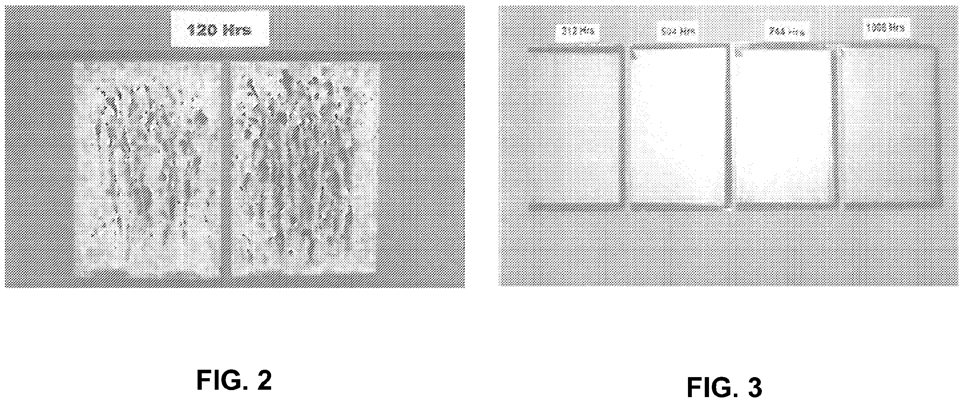

Referring to FIGS. 2 through 12, uncoated metal substrates, having a zinc or zinc-alloy surface, and metal substrates, having a zinc or zinc-alloy surface, coated with a solution of the presently disclosed corrosion-resistant metal component coating, comprising chromium (VI) or chromium (III) compounds, were exposed to the salt fog environment meeting the requirements of ASTM B117. A process for making a corrosion-resistant metal component coating comprises the steps of: combining water, at least one zinc phosphate compound and at least one chromium compound to form a first solution; separately combining at least one silicate compound, with water to form a second solution; combining the first solution with the second solution such as to form a mixed aqueous solution coating mixture; and, applying to a metal substrate with a zinc or zinc-alloy surface to provide a metal substrate with a corrosion-resistant coating mixture providing chemical resistance for at least 150 hours in accordance with ASTM B117 standards for a zinc or zinc-alloy coating weight of (0.04 oz/ft²) 12.20g/m². In some embodiments the at least one silicate compound may comprise a potassium silicate compound. In further embodiments, the mixed aqueous solution comprising a combination of the first solution and the second solution may be combined with at least one acrylic resin to form a coating mixture to be applied to a metal substrate having a zinc or zinc-alloy surface.

One skilled in the art will understand that a corrosion-resistant coating mixture providing chemical resistance for at least 150 hours in accordance with ASTM B117 standards for a metal substrate having a zinc or zinc-alloy coating weight of (0.04 oz/ft²) 12.20 g/m² will provide corrosion resistance for varying periods of time depending on the coating weight of the zinc or zinc-alloy surface of the metal substrate and the coating weight of the corrosion-resistant coating applied to the zinc or zinc-alloy surface of the metal substrate. The metric of chemical resistance for at least 150 hours in accordance with ASTM B117 standards for metal substrate having a zinc or zinc-alloy surface with a coating weight of (0.04 oz/ft²) 12.20g/m² is a benchmark which provides the effectiveness of the presently disclosed corrosion-resistant coating and is not a limitation to a particular zinc or zinc-alloy coating weight on a metal substrate. For example, the present process includes a corrosion-resistant coating mixture providing chemical resistance to a metal substrate having a zinc or zinc-alloy surface for at least 75 hours in accordance with ASTM B117 standards where the metal substrate having a zinc or zinc-alloy surface with a coating weight of (0.02 oz/ft²) 6.10 g/m².

The ASTM B117 standard is a widely used standardized salt spray environment cabinet test. Such a salt spray test is used to evaluate the relative corrosive, or chemical, resistance of coated and uncoated materials exposed to a salt spray fog, of 12ml/hr, at an elevated temperature of (95°F) 35°C. The ASTM B117 standard specifies that specimens are to be placed within an enclosed salt spray cabinet or chamber and subjected to continuous indirect spray of neutral (pH 6.5-7.2) salt water solution. Such a climate may be constantly maintained throughout the salt spray test period. The water used in the salt spray test is compliant with ASTM D1193 Specification for Reagent Water, Type VI. A salt, usually sodium chloride, is added to the water to achieve a solution comprising 5% salt solution. According to ASTM B117 the default position for the specimens within the salt spray chamber is at an angle of 15-30 degrees from the vertical, positioned such that condensation from one specimen will not drip onto another specimen.

Also disclosed is a process for making a corrosion-resistant metal component coating comprising the steps of combining water, at least one zinc phosphate compound and at least one chromium compound to form a first solution; separately combining at least one silicate compound with water to form a second solution; combining the first solution with the second solution to form a corrosion-resistant metal component coating mixture for applying to a metal substrate having a zinc or zinc-alloy surface to form a coating on the metal substrate, the coating providing chemical resistance for at least 150 hours in accordance with ASTM B117 standards where the zinc or zinc-alloy coating of the metal substrate has a weight of (0.04oz/ft²) 12.20 g/m². In some embodiments, the process for making a corrosion-resistant metal component coating may comprise the steps of combining the first solution and the second solution to form a mixed aqueous solution; and, combining the mixed aqueous solution with at least one acrylic resin to form a corrosion-resistant metal component coating mixture.

Additionally disclosed is a process for making a corrosion-resistant metal component comprising the step of applying a corrosion-resistant coating to a metal substrate having a zinc or zinc-alloy surface to provide a metal component having a corrosion-resistant coating having chemical resistance for more than 150 hours in accordance with ASTM B117 standards where the zinc or zinc-alloy coating of the metal substrate has a weight of (0.04oz/ft²) 12.20 g/m², the corrosion-resistant coating comprising a mixed aqueous solution,
the mixed aqueous solution comprising a first solution and a second solution, the first solution comprising water, at least one zinc phosphate compound and at least one chromium compound, the second solution comprising at least one silicate compound and water. In some embodiments, the corrosion-resistant coating may further comprise at least one acrylic resin.

Furthermore, a corrosion-resistant metal component is disclosed, comprising a metal component having a zinc or zinc-alloy coating; and a corrosion-resistant coating providing chemical resistance for more than 150 hours in accordance with ASTM B117 standards where the zinc or zinc-alloy coating of the metal substrate has a weight of (0.04 oz/ft²) 12.20 g/m², wherein the corrosion-resistant coating comprises a first solution and a second solution, wherein the first solution comprises water, at least one zinc phosphate compound and at least one chromium compound; and wherein the second solution comprises at least one silicate compound and water. In some embodiments, the corrosion-resistant coating may further comprise at least one acrylic resin.

The first solution may comprise between 4 percent and 27 percent by weight of water; between 5 percent and 27 percent by weight of the at least one zinc phosphate compound; and between 5 percent and 27 percent by weight of chromium compound. The corrosion-resistant metal component coating may comprise between 20 percent and 95 percent by weight of the first solution; between 5 percent and 12 percent by weight of the second solution; between 5 percent and 30 percent by weight of acrylic resin; and between 5 percent and 50 percent by weight of water. As used in this disclosure, a range specified as between two end points is inclusive of the end points specified.

The first solution may be combined with the second solution to form a mixed aqueous solution. In some embodiments, the mixed aqueous solution may be combined with a least one acrylic resin. In other embodiments, the mixed aqueous solution may not include the acrylic resin. The at least one acrylic resin may have a pH value of no greater than 3.5. Whereas, the corrosion-resistant metal component coating mixture may have a pH value equal to or below 2.5. In some embodiments the coating mixture may have a pH value between 1.0 and 2.5, inclusive. In some embodiments the acrylic resin may be mixed into the aqueous solution in parts, to avoid curdling or separation of the solution, adding a first part of the acrylic resin into the aqueous solution and completing the mixing of the acrylic resin into the aqueous solution. The aqueous solution with the first part of acrylic resin may be mixed for a period of time, for example 20 minutes, before a second part of acrylic resin is mixed into the aqueous solution. This process may be repeated until all of a desired amount of acrylic resin is mixed into the aqueous solution. Further, after all of the desired amount of
acrylic resin has been mixed into the aqueous solution, the solution may be mixed for a further period of time so that the solution may have an even consistency and making it easier to transport.

The corrosion-resistant metal component coating may comprise at least one chromium compound. In some embodiments, the chromium compound may comprise of a trivalent chromium compound. The trivalent chromium compound may be selected from the group consisting of chromium chloride hydrate, chromium (III) potassium sulfate, chromium hydroxide, chromium (III) fluoride, chromium (III) sulfate, chromium (III) sulfide, chromium (III) oxide, chromium (III) 2-ethylhexanoate, chromium (III) nitride, chromium tricarbonyl and mixtures thereof.

In other embodiments, the chromium compound may comprise of a hexavalent chromium compound. The hexavalent chromium compound may be selected from the group consisting of chromium (VI) halides, chromium (VI) hexafluoride, chromyl chloride, sodium chromate, chromium (VI) peroxide, sodium chromate, chromium (VI) oxide, dichromate, potassium chromate, calcium chromate, barium chromate, chromium (VI) oxide peroxide, and mixtures thereof.

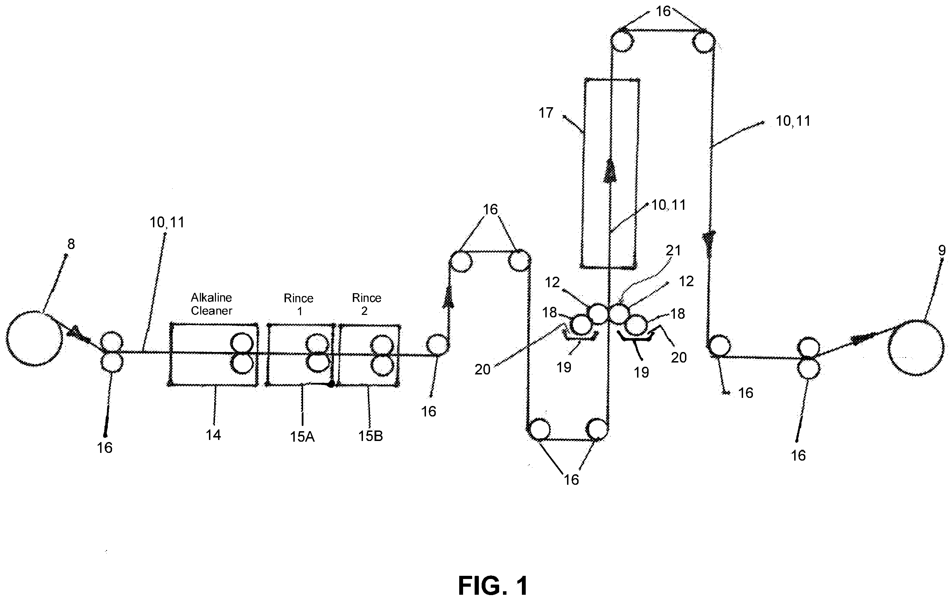

The corrosion-resistant metal component coating may be applied to a metal component having a zinc or zinc-alloy surface in a number of processes. The coating may be applied through immersion, such that the metal component having a zinc or zinc-alloy surface is immersed into a bath of the presently disclosed corrosion-resistant coating, or the corrosion-resistant coating may be sprayed onto the zinc or zinc-alloy surface of the metal component, with or without the aid of electrolysis. However, of specific benefit, the presently disclosed corrosion-resistant metal component coating may be applied in a dry-in-place process, as shown in FIG. 1. A coil **8** comprising metal strip component **10** may be provided. The metal component strip **10** having a zinc or zinc-alloy surface **11** is uncoiled from coil **8,** and the metal strip component **10** may be transported through the dry-in-place process by a series of strip transfer rolls **16.** In the embodiment shown in FIG. 1, the metal strip component **10** passed through an alkaline cleaner **14,** where mill surface oils, which may interfere with the reaction between the zinc or zinc-alloy surface **11** of the metal strip component **10** and the presently disclosed corrosion-resistant coating, are removed from the surface of the metal strip component **10** in preparation for receiving the corrosion-resistant coating. The metal strip **10** is then passed, via strip transfer rolls **16** through rinses **15a** and **15b,** neutralizing the pH level of the zinc or zinc-alloy surface **11** of the metal strip **10** after having been passed through the alkaline cleaner **14.** The metal strip **10** proceeds via strip transfer rolls **16** through the coater **21.** The coater **21** applies the corrosion-resistant metal component coating **20** to the metal strip **10** using reverse-roll coating application method. The coating rolls **12** rotate such that the direction of rotation of the coating rolls opposes the direction of travel of the metal strip **10** proceeding through the coater **21.** Corrosion-resistant metal component coating **20** is held in the coating trays **19** and is picked up from the coating trays **19** by pick-up rolls **18.** The pick-up rolls **18** and the coating rolls **12** rotate at different velocities, allowing corrosion-resistant metal component coating **20** to be transferred from the pick-up rolls **18** to the coating rolls **12.** The speed differential between the coating rolls **12** and the pick-up rolls **18** controls the thickness (coating weight) of the corrosion-resistant metal component coating **20** as it is applied to the strip **10** having a zinc or zinc-alloy surface **11.** The rolls **12** may be adapted to coat only one surface **11** of the metal strip component **10,** alternatively, as shown in FIG. 1, the rolls **12** may be adapted such that two or more sides of the metal component **10** may be coated simultaneously. In other embodiments, the corrosion-resistant metal component coating may be provided to the rolls **12** through passageways [not shown] in the center of the rolls **12,** the passageways having ports **14** allowing the corrosion-resistant coating **15** to travel outward toward the surface of the rolls **12.** Alternatively, the corrosion-resistant coating **15** may be applied to the surface of the rolls **12** directly, via an applicator, or sprayed onto the rolls **12.**

After the corrosion-resistant metal component coating **20** has been applied to the zinc or zinc-alloy surface **11** of the metal strip component **10,** a reaction may occur between the zinc or zinc-alloy surface **11** and the corrosion-resistant coating **20.** The process for making a corrosion-resistant metal component may further comprise the step of heating the coated metal substrate **10** to further the reaction between the applied coating mixture **20** and the zinc or zinc-alloy surface **11** of the metal substrate **10.** Such heating may be provided by a heating apparatus **17,** where the metal substrate **10** is passed, via transfer rolls **16,** through the heating apparatus **17** to finalize the reaction. The heating apparatus **17** may be an infra-red heating apparatus capable of heating the surface **11** of the metal component **10.** In some embodiments the heating apparatus **17** may heat the surface **11** of the metal component **10** to a temperature of between 76.67°C - 98.89°C (170°F - 210°F). In other embodiments, the heating apparatus **17** may heat the surface **11** of the metal component **10** to a higher temperature as desired of up to approximately 371.11 °C (700°F). The metal strip component **10** may be passed through the coating applicator rolls **12** and the heating apparatus **17** at a speed of approximately (600 ft/min) 3.06
m/s. Finally, the coated metal strip component **10** may be re-coiled into coil **9,** for later transportation.

The metal strip component **10** having a zinc or zinc-alloy coating, coated with the corrosion-resistant coating **20** will have improved electrical conductivity compared to metal strip **10** having a zinc or zinc-alloy coating, without the corrosion-resistant coating **20.** Therefore, the coated galvanize metal substrate may improve weldability over non-coated galvanized metal substrates.

The metal strip component **10** may be subsequently heated to temperatures of at least 371.11°C (700°F) and maintain the corrosion-resistance necessary to satisfy ASTM A-1004/A-1004M-99 and ASTM A-1003/A-1003M-05 testing standards for galvannealed metal substrates **10,** or equivalent standards for other forms of galvanized metal substrates **10,** including galvalumed® metal substrates.

The corrosion resistance of uncoated metal substrates, having a zinc or zinc-alloy surface, and metal substrates, having a zinc or zinc-alloy surface, coated with the presently disclosed corrosion-resistant metal component coating comprising chromium (VI) or chromium (III) compounds was determined following the standards and procedures provided by the American Society of Testing and Materials (ASTM) International. Metal substrates having zinc or zinc-alloy surfaces, coated with or without the presently disclosed corrosion-resistant coating, were exposed to a salt fog environment meeting the requirements of ASTM B117. ASTM B117 provides a controlled corrosive environment which has been utilized to produce relative corrosion resistance information for specimens of metals and coated metals exposed in a given test chamber. All corrosion testing practices were performed in compliance with ASTM A-1004/A-1004M-99 and ASTM A-1003/A-1003M-05. While ASTM A-1004/A-1004M-99 and ASTM A-1003/A-1003M-05 are directed to galvennealed panels, one of ordinary skill in the art will understand that the testing under ASTM A-1004/A-1004M-99 and ASTM A-1003/A-1003M-05 is a benchmark, and will appreciate that the presently disclosed corrosion-resistant metal component coating may be applied to all forms of galvanized metal substrate, including, but not limited to, hot-dipped galvanized, galvannealed, electrogalvanized, and galvalume, and meet or exceed the associated ASTM standards. In some embodiments the zinc or zinc-alloy surface is selected from the group consisting of zinc, zinc alloy, zinc-aluminum alloy, zinc-saline solution, heat-treated zinc-alloy solution and combination thereof. According to ASTM A-1003/A-1003M-05, the expected corrosion characteristic for metallic coated sheet steels with nonstructural or non-load-bearing applications is a minimum of 75 hours with less than 10% loss of metallic coating from the surface of the laboratory test samples. The loss of metallic coating from the surface of the laboratory test samples was determined by measuring the percent of red corrosion present after specific times of exposure to the salt spray environment according to ASTM B117.

FIG. 2 shows two HDG G-60 (NCT) panels having been exposed to the salt spray environment according to ASTM B117 for a period of 120 hours. Referring to FIG. 3, galvannealed metal sheets were exposed to a salt fog environment meeting the requirements of ASTM B117 for periods of 312 hours, 504 hours, 744 hours, and 1008 hours. As illustrated in FIG. 2, the uncoated HDG G-60 (NCT) metal substrate panels showed extensive visible corrosion after 120 hours of exposure to salt spray, presenting red corrosion over 50% of the surface area of the metal substrate panels after 120 hours of exposure to the salt spray environment. FIG. 3 shows four galvannealed panels coated with the presently disclosed corrosion-resistant metal component coating comprising chromium (VI) compounds after being exposed to the salt spray environment for 312 hours, 504 hours, 744 hours and 1008 hours. As illustrated in FIG. 3, the galvannealed panels coated with the presently disclosed corrosion-resistant metal component coating do not show any visible red corrosion after being exposed to the salt spray environment for 1008 hours. Zero percent (0%) of the surface area of all four galvannealed panels coated with the presently disclosed corrosion-resistant coating, presented red corrosion after 1008 hours of exposure to the salt spray environment.

Galvannealed panels coated with the presently disclosed corrosion-resistant metal component coating comprising chromium (VI) compounds, without the optional acrylic resin, from different production runs were also exposed to the salt fog environment meeting the requirements of ASTM B 117 for periods of 312 hours, 504 hours, 744 hours, and 1008 hours. Table 1 provides a summary of the percent of surface area of the panels affected by red corrosion for galvannealed panels coated with the presently disclosed corrosion-resistant coating after being exposed to a salt fog environment. All galvannealed panels coated with the corrosion-resistant coating showed zero percent (0%) of surface area affected by red corrosion for up to 1008 hours of exposure to the salt spray environment. Conversely, the HDG G-60 (NCT) metal substrate panels showed red corrosion over 50% of their surface area after just 120 hours of exposure to the salt spray environment.

**Table 1**

| **Galvanneal Panel Set. No.** | **Salt Spray Hours** | **Percent Red Corrosion** |
|---|---|---|
| 1 | 312 | 0% |
| | 504 | 0% |
| | 744 | 0% |
| | 1008 | 0% |
| 2 | 312 | 0% |
| | 504 | 0% |
| | 744 | 0% |
| | 1008 | 0% |
| 3 | 312 | 0% |
| | 504 | 0% |
| | 744 | 0% |
| | 1008 | 0% |
| 4 | 312 | 0% |
| | 504 | 0% |
| | 744 | 0% |
| | 1008 | 0% |
| 5 | 312 | 0% |
| | 504 | 0% |
| | 744 | 0% |
| | 1008 | 0% |
| Uncoated G-60 (NCT) | 120 | 50% |

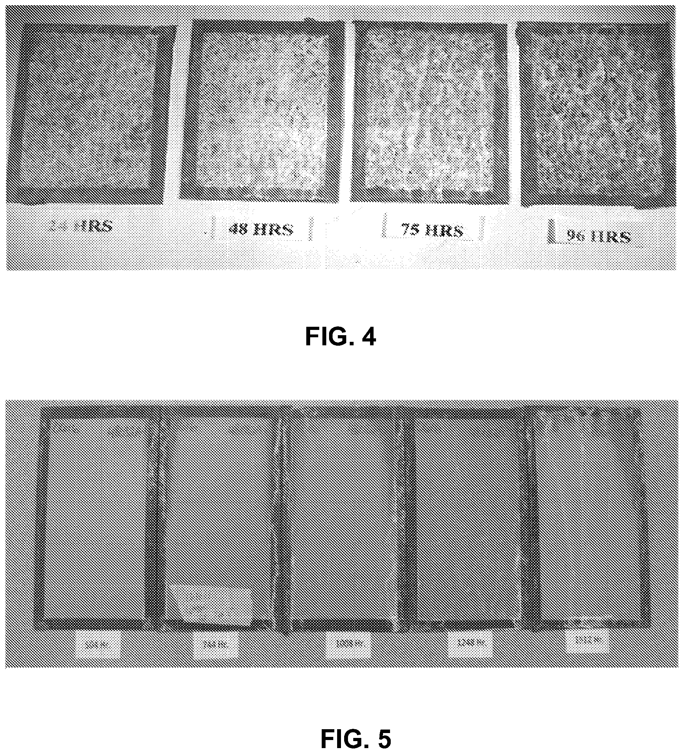

In a separate test galvannealed panels were exposed to a salt fog environment meeting the requirements of ASTM B117 for periods of 504 hours, 744 hours, 1008 hours, 1248 hours, and 1512 hours. As illustrated in FIG. 4, the uncoated A-25 metal substrate panels (galvannealed metal substrate having a zinc or zinc-alloy coating weight of at least (0.25 oz/ft²) 76.29 g/m² showed extensive visual corrosion after 48 hours of exposure to the salt spray environment. The presence of red corrosion became more visible as the exposure to salt spray increased. The uncoated A-25 metal substrate test panel failed to meet the specifications established by ASTM A-1003/A-1003M by presenting red corrosion over more than 10% of the surface area of the A-25 metal substrate after only 48 hours of exposure to salt spray. FIG. 5 shows five galvannealed panels coated with the presently disclosed corrosion-resistant metal component coating comprising chromium (VI) compounds and acrylic resin after being exposed to salt spray for up to 1512 hours. As illustrated in FIG. 5, none of the galvannealed panels coated with the presently disclosed corrosion-resistant metal component coating comprising acrylic resin showed any visible appearance of red corrosion after being exposed to salt spray for up to 1512 hours. Zero percent (0%) of the surface area of the galvannealed panels coated with the presently disclosed corrosion-resistant coating showed signs of red corrosion. Coating galvannealed metal sheets with the presently disclosed corrosion-resistant metal component coating showed no indication of corrosion when exposed to over 1512 hours of the salt spray environment.

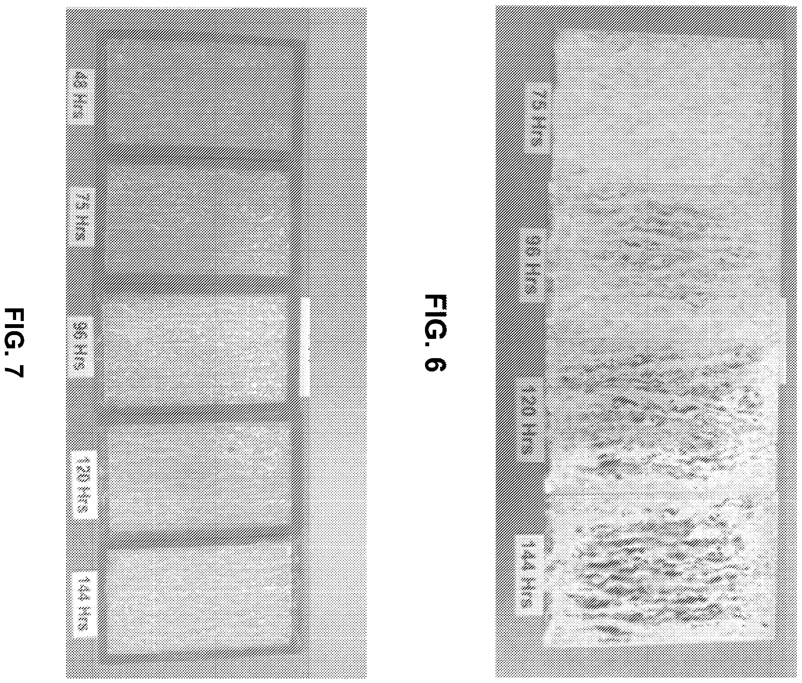

Referring to FIGS. 6 through 12, the presently disclosed corrosion-resistant metal component coating comprising chromium (III) or chromium (VI) compounds may also be applied to metal substrates, having a zinc or zinc-alloy surface, that are to be cold-reduced and provide enhanced corrosion protection after the reducing process. After being coated with the presently disclosed corrosion-resistant coating, the zinc or zinc-alloy coated panels were reduced and exposed to a salt fog environment meeting the standards of ASTM B 117. Referring to FIG. 7, metal panels, having a zinc or zinc-alloy surface, were coated with the presently disclosed corrosion-resistant coating comprising acrylic resin, cold-reduced by 15% to 23%, and were exposed to a salt fog for periods of 48 hours, 75 hours, 96 hours, 120 hours, and 144 hours. As illustrated in FIG. 6, the HDG G-40 (NCT) metal substrate panels showed visual corrosion after 75 hours of exposure to the salt spray environment. Red corrosion became more visible as the exposure to the salt spray environment increased. The standard HDG G-40 (NCT) metal substrate panels showed 1%, 25%, 50%, and 75% of surface area affected by red corrosion after 72 hours, 96 hours, 120 hours, and 144 hours of exposure to the salt spray environment, respectively. FIG. 7 shows metal panels, having a zinc or zinc-alloy surface, which have been coated with the presently disclosed corrosion-resistant metal component coating comprising chromium (III) compounds and acrylic resin and then cold-reduced by 15% to 23%. The coated galvanized panels were then subjected to 48 hours, 75 hours, 96 hours, 120 hours, and 144 hours of salt spray testing. Zero percent (0%) of the surface area of the cold-reduced coated galvanized panels were affected by red corrosion.

Table 2 provides a summary of tests performed, showing the percent of red corrosion for zinc-alloy coated panels coated with the presently disclosed corrosion-resistant metal component coating comprising chromium (III) compounds and acrylic resin, having been cold-reduced after coating by 15% to 23% and exposed to a salt fog environment meeting the requirements of ASTM B117, for periods of 48 hours, 75 hours, 96 hours, 120 hours, and 144 hours. All zinc-alloy coated panels, coated with the presently disclosed corrosion-resistant metal component coating, and reduced after coating by 15% to 23%, showed zero percent (0%) surface area of the panels affected by red corrosion after being exposed to salt spray for up to 120 hours. The panels, having a zinc or zinc-alloy surface, coated with the presently disclosed corrosion-resistant metal component coating, and cold-reduced after coating by 15% to 23% exceeded the ASTM A-1003/A-1003M standards by presenting less than three percent (3%) of red corrosion after 144 hours of exposure to the salt spray environment. The zinc-alloy coated panels coated with the presently disclosed corrosion-resistant metal component coating, and cold-reduced by 15% to 23% showed complete resistance to corrosion for up to 120 hours of salt spray, and red rust over less than 3% of the surface area at 144 hours salt spray compared to red corrosion over 75% of the surface area of the standard HDG G-40 (NCT) panels after 144 hours of exposure to the salt spray environment.

**Table 2**

| **Galvanneal Metal Substrate Cold-Reduced by 15-23% Set. No.** | **Salt Spray Hours** | **Percent Red Corrosion** |
|---|---|---|
| | 48 | 0% |
| 1 | 75 | 0% |
| chromium (III) | 96 | 0% |
| with acrylic resin | 120 | 0% |
| | 144 | <3% |
| | 48 | 0% |
| 2 | 75 | 0% |
| chromium (III) | 96 | 0% |
| with acrylic resin | 120 | 0% |
| | 144 | <3% |
| | 48 | 0% |
| 3 | 75 | 0% |
| chromium (III) | 96 | 0% |
| with acrylic resin | 120 | 0% |
| | 144 | <3% |
| Uncoated HDG G-40 (NCT) | 72 | 1% |
| | 96 | 25% |
| | 120 | 50% |
| | 144 | 75% |

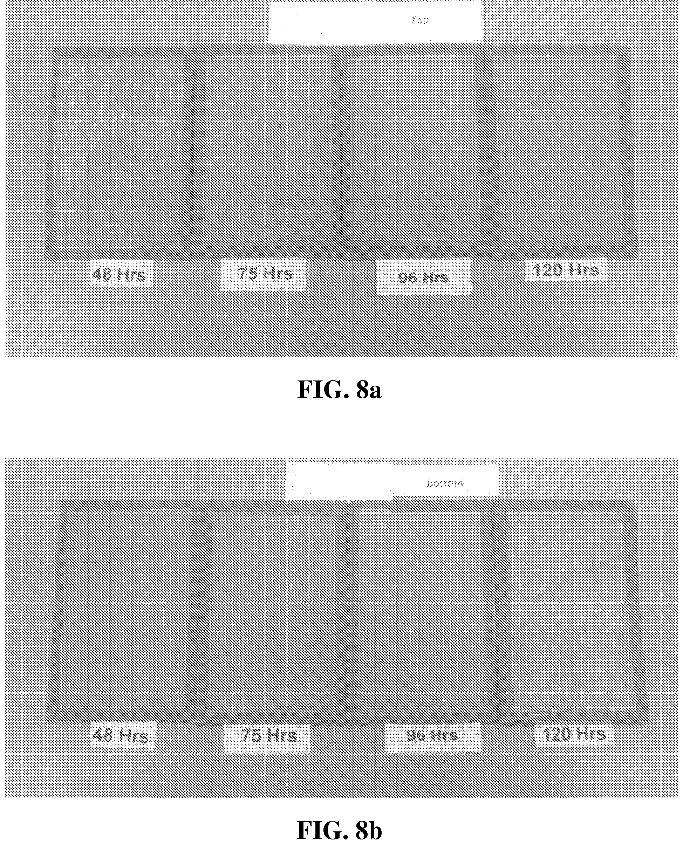

Referring to FIGS. 8a-b, zinc or zinc-alloy coated panels were cold-reduced by 16% to 23% after being coated with the presently disclosed corrosion-resistant metal component coating comprising chromium (VI) compounds and acrylic resin. Uncoated zinc or zinc-alloy coated panels were exposed to a salt fog environment meeting the requirements of ASTM B117 for periods of 48 hours, 75 hours, 96 hours, and 120 hours. As illustrated in FIG. 6, the HDG G-40 (NCT) metal substrate panels showed visual corrosion after 48 hours of exposure to the salt spray environment. Red corrosion became more visible as the exposure to the salt spray environment increased. The HDG G-40 (NCT) metal substrate panels showed 5%, 10%, 25%, and 50% of red corrosion after 48 hours, 75 hours, 96 hours, and 120 hours of salt spray exposure, respectively. FIG. 8a shows the top view of zinc-alloy coated metal panels coated with the presently disclosed corrosion-resistant metal component coating comprising chromium (VI) compounds and cold-reduced after coating by 16% to 23% and then exposed to salt spray for 48 hours, 75 hours, 96 hours, and 120 hours. FIG. 8b, shows the bottom view of zinc-alloy coated panels coated with the presently disclosed corrosion-resistant metal component coating comprising chromium (VI) compounds and cold-reduced after coating by 16% to 23% and exposed to salt spray for 48 hours, 75 hours, 96 hours, and 120 hours. Zero percent (0%) of the surface area of the zinc-alloy coated metal panels coated with the presently disclosed corrosion-resistant metal component coating comprising chromium (III) compounds and cold-reduced after coating by 16% to 23%, showed signs of red corrosion.

Zinc-alloy panels coated with the presently disclosed corrosion-resistant metal component coating comprising chromium (VI) compounds and cold-reduced after coating by 16% to 23% from different production runs were exposed to the salt fog environment. Table 3 provides a summary of the percent of surface area affected by red corrosion for zinc-alloy coated panels coated with the presently disclosed corrosion-resistant metal component coating, and cold-reduced after coating by 16% to 23% and exposed to the salt fog environment meeting the requirements of ASTM B 117, for periods of 48 hours, 75 hours, 96 hours, and 120 hours. All zinc-alloy panels that were coated with the presently disclosed corrosion-resistant metal component coating, and were cold-reduced after coating by 16% to 23% showed zero percent (0%) of surface area affected by red corrosion. The zinc-alloy panels coated with the presently disclosed corrosion-resistant metal component coating, and cold-reduced by 16% to 23% showed no indication of corrosion for up to 120 hours of the salt spray exposure, compared with the standard HDG G-40 NCT, which presented 50% of red corrosion after 120 hours of the salt spray exposure.

**Table 3**

| **Metal Substrate Cold-Reduced by 16-23% Set No.** | **Salt Spray Hours** | **Percent Red Corrosion** |
|---|---|---|
| | 48 | 0% |
| 1 | 75 | 0% |
| chromium (IV) | 96 | 0% |
| with resinacrylic | 120 | 0% |
| | 48 | 0% |
| 2 | 75 | 0% |
| chromium (IV) | 96 | 0% |
| with acrylic resin | 120 | 0% |
| | 48 | 0% |
| 3 | 75 | 0% |
| chromium (IV) | 96 | 0% |
| with acrylic resin | 120 | 0% |
| Uncoated HDG G-40 (NCT) | 48 | 5% |
| | 75 | 10% |
| | 96 | 25% |
| | 120 | 50% |

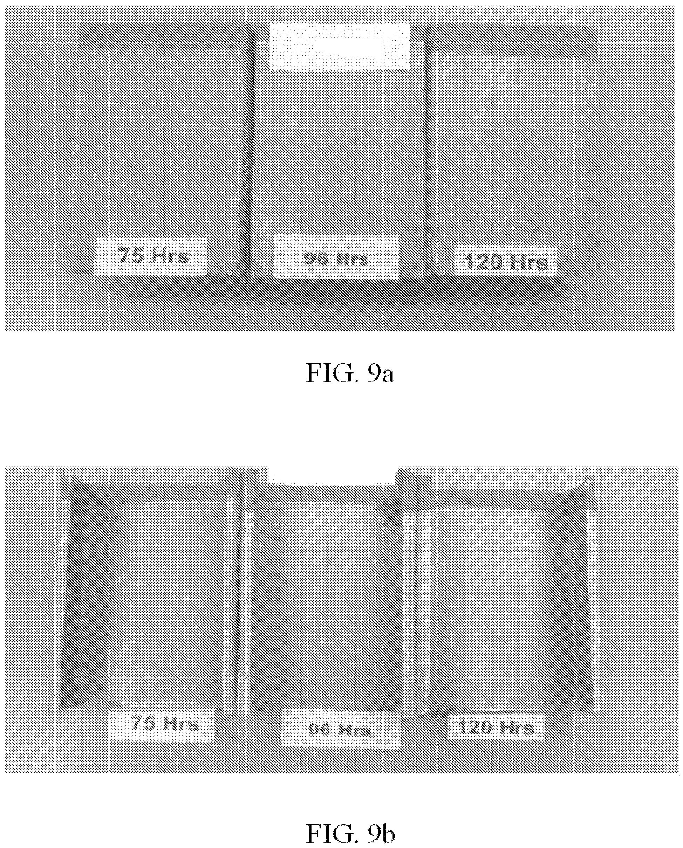

FIGS. 9a-b show finished formed studs, having a zinc-alloy surface, coated with the presently disclosed corrosion-resistant metal component coating comprising chromium (VI) compounds and cold-reduced after coating by 16% to 23% were exposed to a salt fog environment meeting the requirements of ASTM B117 for periods of 75 hours, 96 hours, and 120 hours. As illustrated in FIG. 9a, the top part of the finished formed studs, having a zinc-alloy surface, coated with the presently disclosed corrosion-resistant metal component coating, and cold-reduced after coating by 16% to 23% showed zero percent (0%) of surface area affected by red corrosion after being exposed to the salt spray environment for 75 hours, 96 hours, and 120 hours. Similarly, FIG. 9b shows the bottom part of the finished formed studs, having a zinc-alloy surface, coated with the presently disclosed corrosion-resistant metal component coating comprising chromium (VI) compounds and cold-reduced after coating by 16% to 23%. Zero percent (0%) of the surface area of the finished formed studs, having a zinc-alloy surface, coated with the presently disclosed corrosion-resistant coating, cold-reduced, and exposed to the salt fog environment for up to 120 hours, showed signs of red corrosion.

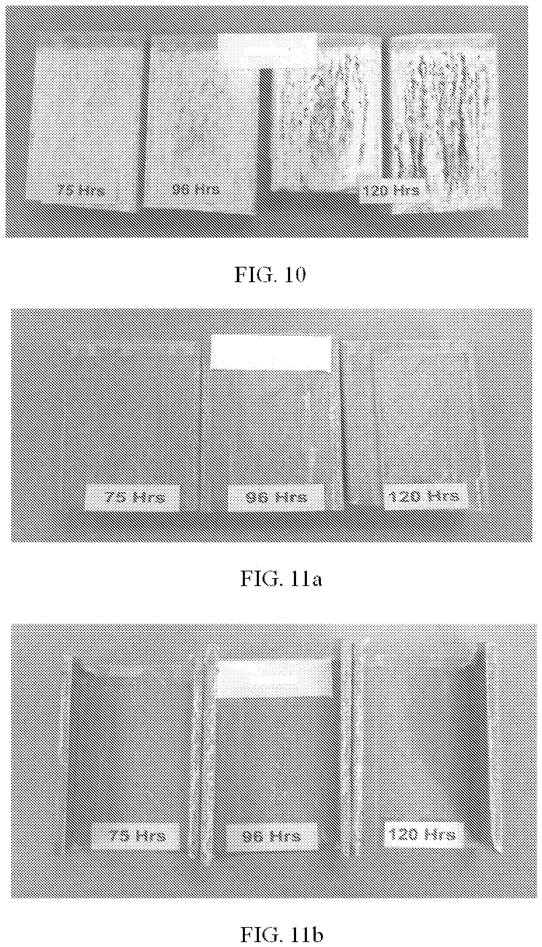

FIGS. 10 through 12 illustrate metal substrates having a zinc or zinc-alloy surface, coated with the presently disclosed corrosion-resistant metal component coating comprising chromium (III) or chromium (VI) compounds, cold-reduced by 23% to 24% after coating and subject to the salt spray testing environment. As shown by FIGS. 10 and 11a-b, finished formed studs of zinc-alloy coated metal substrate coated with the presently disclosed corrosion-resistant metal component coating comprising chromium (III) compounds, cold-reduced by 23% to 24% after coating and exposed to the salt fog environment, meeting the requirements of ASTM B117, for periods of 75 hours, 96 hours, and 120 hours. FIG. 10 shows HDG G-40 (NCT) finished formed studs having been subjected to the salt spray testing environment for up to 120 hours. The HDG G-40 (NCT) finished formed studs showed visual corrosion after 96 hours of exposure to the salt spray environment. The HDG G-40 (NCT) finished formed studs presented 5% and 25% of red corrosion after 96 hours and 120 hours of salt spray environment exposure, respectively. As illustrated by FIGS. 11a-b, finished formed studs made with zinc-alloy coated metal substrate coated with the presently disclosed corrosion-resistant metal component coating comprising chromium (III) compounds and cold-reduced by 23% to 24% after coating have enhanced corrosion resistance. As seen in FIGS. 11a and 11b, both top and bottom views of the finished formed studs, having a zinc-alloy surface, coated with the presently disclosed corrosion-resistant metal component coating presented zero percent (0%) of surface area affected by red corrosion after being exposed to salt spray for 75 hours, 96 hours, and 120 hours.

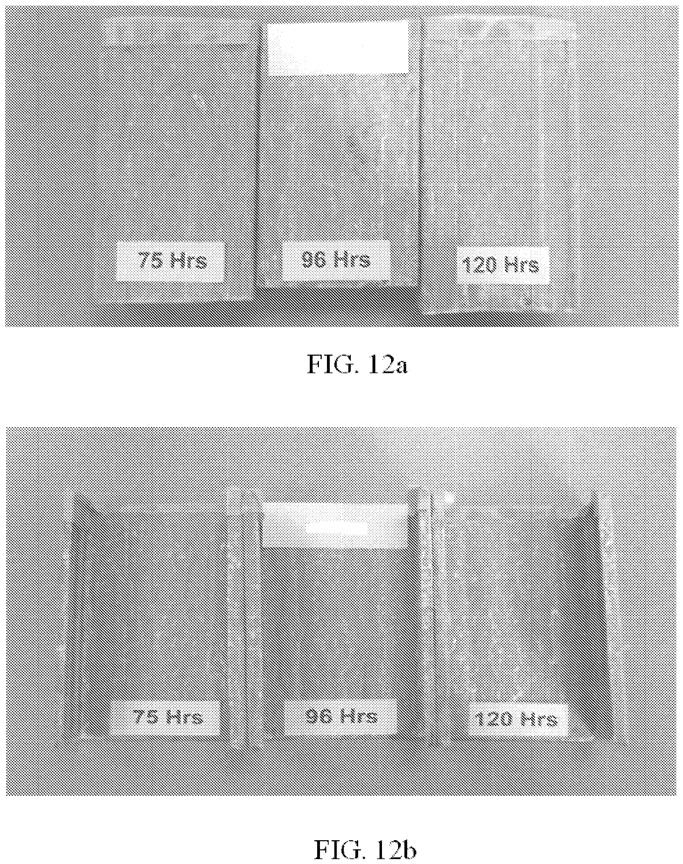

Similarly, metal substrates having a zinc or zinc-alloy surface were coated with the presently disclosed corrosion-resistant metal component coating comprising chromium (VI) compounds, cold-reduced by 23% to 24% and subjected to salt spray testing. FIGS. 12a-b illustrate finished formed studs, having a zinc-alloy surface, coated with the presently disclosed corrosion-resistant metal component coating comprising chromium (VI) compounds, cold-reduced by 23% to 24% after coating, and exposed to the salt fog environment meeting the requirements of ASTM B117, for periods of 75 hours, 96 hours, and 120 hours. As illustrated in FIGS. 12a and 12b, both top and bottom views of the finished formed studs, having a zinc-alloy surface, coated with the presently disclosed corrosion-resistant metal component coating comprising chromium (VI) compounds present zero percent (0%) of their surface area affected by red corrosion after being exposed to the salt spray environment for of 75 hours, 96 hours, and 120 hours.

The effectiveness of the presently disclosed corrosion-resistant metal component coating comprising chromium (III) or chromium (VI) compounds to protect galvanized metal substrates, such as hot-dip galvanized metal substrates or galvannealed metal substrates, from corrosion is dependent upon the thickness of the zinc or zinc-alloy coating and the thickness of the presently disclosed corrosion-resistant metal component coating. Table 4 provides a summary of the number hours achieved under the salt spray testing environment with less than ten percent (10%) of weight loss for HDG G-30 metal substrates coated with the presently disclosed corrosion-resistant metal component coating. Over 1000 hours of corrosion-free salt spray environment testing were obtained for galvanized metal coated with the presently disclosed corrosion-resistant metal component coating, with a coating weight of at least 0.0106 oz/ft² (3.23 g/m²). Over 500 hours of corrosion-free salt spray testing was obtained for galvanized metal substrates coated with the presently disclosed corrosion-resistant metal component coating comprising chromium (VI) compounds to a coating weight of at least (0.0053 oz/ft²) 1.61 g/m². And, over 500 hours of corrosion-free salt spray environment testing were obtained for galvanized metal substrates coated with the presently disclosed corrosion-resistant metal component coating comprising chromium (III) compounds to a coating weight of at least (0.0053 oz /ft²) 1.61 g/m².

**Table 4**

| **Metal substrate** | **Chromium compound** | **Coating weight ((oz/ft²) g/m²)** | **Salt spray hours achieved with less than 10% weight loss** |
|---|---|---|---|
| Galvanized G-30 | Chromium (VI) | (0.0106-0.0132) 3.229-4.036 | 1000 hours + |
| | Chromium (III) | (0.0106-0.0127) 3.229-3.875 | 1000 hours + |
| | Chromium (VI) | (0.0053-0.0071) 1.615-2.153 | 500 hours + |
| | Chromium (III) | (0.0053-0.0071) 1.615-2.153 | 500 hours + |

Similarly, the effectiveness of the presently disclosed corrosion-resistant metal component coating comprising chromium (III) or chromium (VI) compounds to protect galvannealed metal substrates from corrosion is dependent upon the coating thickness of the presently disclosed corrosion-resistant metal component coating. Table 5 provides a summary of the number of hours of salt spray testing achieved with less than ten percent (10%) of weight loss after exposing galvannealed A-25 or A-40 metal substrates coated with the presently disclosed corrosion-resistant metal component coating comprising chromium (III) or chromium (VI) compounds to a salt fog environment meeting the requirements of ASTM B117. Over 1000 hours of salt spray testing were obtained for galvannealed metal substrate coated with the presently disclosed corrosion-resistant metal component coating comprising having a coating weight of at least (0.0106 oz/ft²) 3.23 g/m², while maintaining less than 10% red corrosion on the surface of the metal substrate. Whereas, over 500 hours of salt spray testing were obtained for galvannealed metal substrates coated with presently disclosed corrosion-resistant metal component coating comprising chromium (VI) compounds to a coating weight of at least (0.0053 oz/ft²) 1.61 g/m², while maintaining less than 10% red corrosion on the surface of the metal substrate. And, over 500 hours of salt spray environment testing were obtained for galvannealed metal substrates coated with presently disclosed corrosion-resistant metal component coating comprising chromium (III) compounds to a coating weight of at least (0.0053 mg/ft²) 1.61 g/m², while maintaining less than 10% red corrosion on the surface of the metal substrate.

**Table 5**

| **Metal substrate** | **Chromium compound** | **Coating weight ((oz/ft²) g/m²)** | **Salt spray hours achieved with less than 10% weight loss** |
|---|---|---|---|
| Galvannealed A-25 or A-40 | Chromium (VI) | (0.0106-0.0132) 3.229-4.036 | 1000 hours + |
| | Chromium (III) | (0.0106-0.0127) 3.229-3.875 | 1000 hours + |
| | Chromium (VI) | (0.0053-0.0071) 1.615-2.153 | 500 hours + |
| | Chromium (III) | (0.0053-0.0071) 1.615-2.153 | 500 hours + |

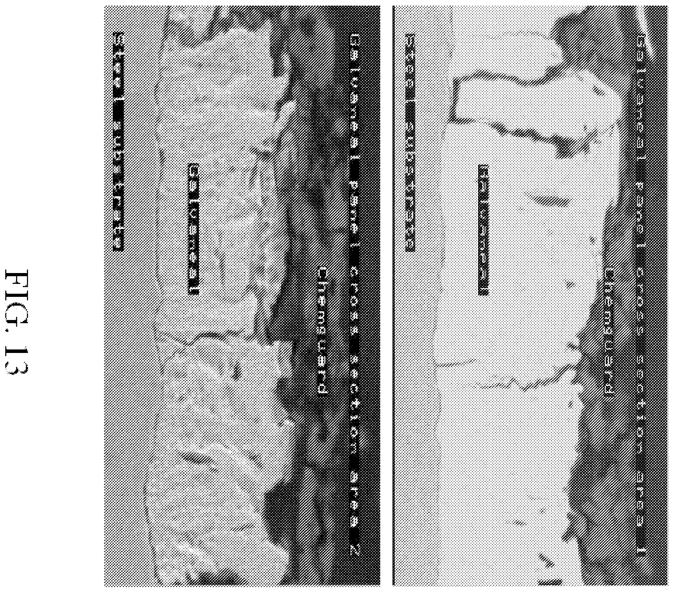

As illustrated in FIGS. 2 through 12, the application of the presently disclosed corrosion-resistant metal component coating, comprising chromium (III) or chromium (VI) compounds, to the metal substrates having a zinc or zinc-alloy surface, significantly enhances the ability of the metal substrate to resist corrosion. The presently disclosed corrosion-resistant metal component coating interacts with the zinc or zinc-alloy coated metal substrate. The Scanning Electron Microscope (SEM) images in FIG. 13 show the reaction between the presently disclosed corrosion-resistant metal component coating and the zinc or zinc-alloy surface of the metal substrate. Such a reaction forms a bond, which may be a chemical bond, between the presently disclosed corrosion-resistant coating and the zinc or zinc-alloy surface. Alternatively, such a reaction may form a different adhesive effect between the corrosion-resistant metal component coating and the zinc or zinc alloy surface of the metal substrate. The SEM images show the imperfections (i.e. fractures and/or porosity) that exist in zinc or zinc-alloy surface. When the presently disclosed corrosion-resistant metal component coating is applied to a zinc or zinc-alloy surface of the metal substrate, the coating mixture may penetrate down into any deep cracks and voids in the zinc coating. The reaction between the corrosion-resistant metal component coating and the zinc or zinc-alloy surface of the metal substrate may seal off exterior corrosion sources and protect the zinc layer as well as the carbon steel base metal.

In one embodiment, the coating mixture may be applied by rolling the coating mixture onto the metal component surface. This direct mode of application may decrease the amount of residual coating mixture. In another embodiment, the coating mixture may be applied by spraying the coating mixture onto the metal component surface, or alternatively, the coating mixture may he applied by submersing at least a portion of the metal substrate with a zinc or zinc-alloy surface into a bath of the presently disclosed corrosion-resistant metal component coating.

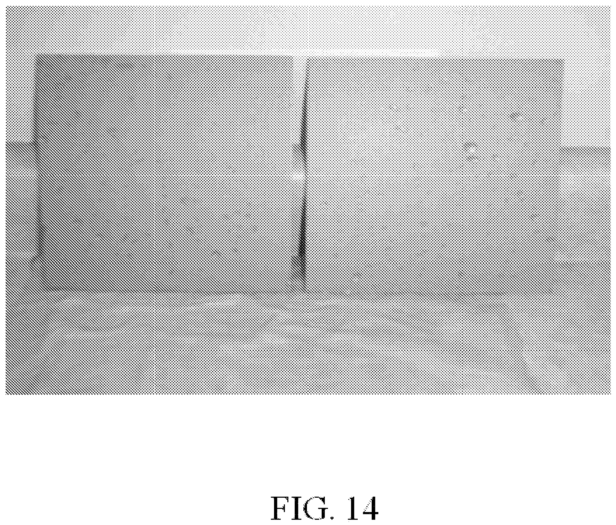

As illustrated in FIG. 14, the metal substrates having a zinc or zinc-alloy surface and coated with the presently disclosed corrosion-resistant metal component coating comprising chromium (III) or chromium (VI) compounds may be water-repellant. Water-repellency provides extra protection for the zinc or zinc-alloy substrate against corrosion. In air, newly exposed zinc reacts with oxygen to form a very thin zinc oxide layer. When moisture is present, zinc reacts with water resulting in the formation of zinc hydroxide, when dry, this becomes zinc oxide. Zinc oxide prevents paint from adhering to the metal as well as accelerates further corrosion of the metal which is unsightly to any galvanized coating's appearance. Furthermore, pure water contains essentially no dissolved minerals and the zinc will react quickly with pure water to form zinc hydroxide, a bulky white and relatively unstable oxide of zinc. Where freshly galvanized steel is exposed to pure water (e.g., rain, dew or condensation, etc.) particularly in an oxygen-deficient environment, the water may continue to react with the zinc and progressively consume the zinc or zinc-alloy coating.

The presently disclosed corrosion-resistant coating may be self-healing. The coating protecting a metal substrate from corrosion may protect the metal substrate even if the metal substrate is cut, scratched or abraded. For example, a metal substrate may become scratched when being cold-rolled using rollers which have surface defects imparting
scratches onto the surface of the molten metal. Scratching of the metal substrate may remove the corrosion-resistant coating from that portion, exposing the metal substrate. It is desirable that a corrosion-resistant coating will protect the exposed portion of the metal substrate. One such method of protection is to provide sufficient corrosion-resistant coating material that part of the coating may remain non-reacted with the zinc or zinc-alloy surface. The non-reacted coating may then react with the scratched, exposed, portion of the metal substrate forming a protective coating over it. Thus, the corrosion-resistant coating is self-healing.

## Claims

1. A process for making a corrosion-resistant metal component coating comprising the steps of:
combining water, at least one zinc phosphate compound and at least one chromium compound to form a first solution;
separately combining at least potassium silicate with water to form a second solution;
combining the first solution with the second solution to form a corrosion-resistant metal component coating mixture for applying to a metal substrate having a zinc or zinc-alloy surface to form a coating on the metal substrate, the coating providing chemical resistance for at least 150 hours in accordance with ASTM BI 17 standards where the zinc or zinc-alloy coating of the metal substrate has a weight of (0.04 oz/ ft²) 12.20g/m².

2. A process for making a corrosion-resistant metal component coating as claimed in claim 1, further comprising the step of combining the coating mixture with at least one acrylic resin.

3. A process for making a corrosion-resistant metal component coating as claimed in claim 1 or 2, further comprising the step of applying the coating mixture to a metal substrate having a zinc or zinc-alloy surface to form a coating on the metal substrate.

4. A process for making a corrosion-resistant metal component coating as claimed in claim 2 wherein the at least one acrylic resin has a pH value of no greater than 3.5.

5. A process for making a corrosion-resistant metal component coating as claimed in claim 3, further comprising the step of heating the coated metal substrate to further the reaction between the applied coating mixture and the surface of the substrate.

6. A process for making a corrosion-resistant metal component coating as claimed in claim 3 wherein the zinc or zinc-alloy surface is selected from the group consisting of zinc, zinc alloy, zinc-aluminum alloy, zinc-saline solution, heat-treated zinc-alloy solution and combination thereof.

7. A process for making a corrosion-resistant metal component coating as claimed in claim 3 wherein the coating mixture reacts with the zinc or zinc-alloy surface of the metal substrate forming a chemical bond with the zinc or zinc-alloy surface.

8. A process for making a corrosion-resistant metal component coating as claimed in claim 1 or 2 wherein the first solution comprises:
not less than 4 and not more than 27 percent by weight of water; not less than 5 and not more than 27 percent by weight of the at least one zinc phosphate compound; and
not less than 5 and not more than 27 percent by weight of the at least one chromium compound.

9. A process for making a corrosion-resistant metal component as claimed in claim 1 or 2, wherein the corrosion-resistant metal component coating comprises:
not less than 20 and not more than 95 percent by weight of the first solution; not less than 5 and not more than 12 percent by weight of the second solution; and
not less than 5 and not more than 50 percent by weight of water.

10. A process for making a corrosion-resistant metal component coating as claimed in claims 1 or 2 wherein the coating mixture has a pH value of no greater than 3.5.

11. A process for making a corrosion-resistant metal component as claimed in claims 1 or 2 wherein the at least one chromium compound comprises a trivalent chromium compound.

12. A process for making a corrosion-resistant metal component as claimed in claim 11 wherein the trivalent chromium compound is selected from the group consisting of chromium chloride hydrate, chromium (III) potassium sulfate, chromium hydroxide, chromium (III) fluoride, chromium (III) sulfate, chromium (III) sulfide, chromium (III) oxide, chromium (III) 2-ethylhexanoate, chromium (III) nitride, chromium tricarbonyl and mixtures thereof.

13. A process for making a corrosion-resistant metal component as claimed in claims 1 or 2 wherein the at least one chromium compound comprises a hexavalent chromium compound.

14. A process for making a corrosion-resistant metal component as claimed in claim 13 wherein the hexavalent chromium compound is selected from the group consisting of chromium (VI) halides, chromium (VI) hexafluoride, chromyl chloride, sodium chromate, chromium (VI) peroxide, sodium chromate, chromium (VI) oxide, dichromate, potassium chromate, calcium chromate, barium chromate, chromium (VI) oxide peroxide, and mixtures thereof.

15. A process for making a corrosion-resistant metal component as claimed in claim 3 wherein the step of applying the coating mixture comprises rolling the coating mixture onto the metal component surface.

16. A process for making a corrosion-resistant metal component as claimed in claim 3 wherein the step of applying the coating mixture comprises spraying the coating mixture onto the metal component surface.

17. A process for making a corrosion-resistant metal component as claimed in claim 3 wherein the step of applying the coating mixture comprises submersing at least a portion of the metal substrate with a zinc or zinc-alloy surface into a bath of the coating mixture.

18. A process for making a corrosion-resistant metal component as claimed in claim 3 wherein the step of applying the coating mixture solution further comprises filling any voids in the zinc or zinc-alloy surface with the coating mixture solution.

19. A process for making a corrosion-resistant metal component coating as claimed in claims 1 or 2 wherein the corrosion-resistant metal component coating has a pH value of not less than 1.0 and no greater than 2.5.

20. A process for making a corrosion-resistant metal component coating as claimed in claims 1, 2, or 3 wherein the corrosion-resistant metal component coating is electrically conductive.

21. A process for making a corrosion-resistant metal component coating as claimed in claims 1, 2, or 3 wherein the corrosion-resistant metal component coating is water-repellant.

22. A process for making a corrosion-resistant metal component coating as claimed in claim 1, 2, or 3 wherein the corrosion-resistant metal component coating provides an enhanced surface for a zinc or zinc-alloy coated metal component for adhesion to paints.

23. A process for making a corrosion-resistant metal component coating as claimed in claims 1 or 2 wherein the corrosion-resistant metal component coating is self-healing.

24. A corrosion-resistant metal component having a corrosion-resistant coating obtainable by the process as claimed in any of claims 1 to 23.

25. A corrosion-resistant metal component comprising:
a metal component having a zinc or zinc-alloy coating; and
a corrosion-resistant coating providing chemical resistance for more than 150 hours in accordance with ASTM BI 17 standards where the zinc or zinc-alloy coating of the metal substrate has a weight of (0.04oz/ft²) 12.20g/m², wherein the corrosion-resistant coating comprises a first solution and a second solution, combined to form a mixed aqueous solution, wherein the first solution comprises water, at least one zinc phosphate compound and at least one chromium compound; and
wherein the second solution comprises potassium silicate and water.

26. A corrosion-resistant metal component as claimed in claim 25 wherein the corrosion-resistant coating further comprises at least one acrylic resin.

## Patentansprüche

1. Verfahren zur Herstellung einer korrosionsfesten Metallkomponentenbeschichtung, das die Schritte umfasst:
Kombinieren von Wasser, wenigstens einer Zink-Phosphatverbindung und wenigstens einer Chromverbindung, um eine erste Lösung zu bilden;
separates Kombinieren von wenigstens Kaliumsilikat mit Wasser, um eine zweite Lösung zu bilden;
Kombinieren der ersten Lösung mit der zweiten Lösung, um ein korrosionsfestes Metallkomponentenbeschichtungsgemisch zum Aufbringen auf ein Metallsubstrat mit einer Zink- oder Zinklegierungsoberfläche zu bilden, um eine Beschichtung auf dem Metallsubstrat zu bilden, wobei die Beschichtung eine chemische Beständigkeit für wenigstens 150 Stunden entsprechend den ASTM B117 Standards bereitstellt, wobei die Zink- oder Zinklegierungsbeschichtung des Metallsubstrats ein Gewicht von (0,04 oz/ft²) 12,20 g/m² hat.

2. Verfahren zur Herstellung einer korrosionsfesten Metallkomponentenbeschichtung nach Anspruch 1, das des Weiteren den Schritt zum Kombinieren des Beschichtungsgemisches mit wenigstens einem Acrylharz umfasst.

3. Verfahren zur Herstellung einer korrosionsfesten Metallkomponentenbeschichtung nach Anspruch 1 oder 2, das des Weiteren den Schritt zum Aufbringen des Beschichtungsgemisches auf ein Metallsubstrat mit einer Zink- oder Zinklegierungsoberfläche umfasst, um eine Beschichtung auf dem Metallsubstrat zu bilden.

4. Verfahren zur Herstellung einer korrosionsfesten Metallkomponentenbeschichtung nach Anspruch 2, wobei das wenigstens eine Acrylharz einen pH-Wert von nicht größer als 3,5 hat.

5. Verfahren zur Herstellung einer korrosionsfesten Metallkomponentenbeschichtung nach Anspruch 3, das des Weiteren den Schritt zum Erwärmen des beschichteten Metallsubstrats umfasst, um die Reaktion des aufgebrachten Beschichtungsgemisches und der Oberfläche des Substrats zu fördern.

6. Verfahren zur Herstellung einer korrosionsfesten Metallkomponentenbeschichtung nach Anspruch 3, wobei die Zink- oder Zinklegierungsoberfläche aus der Gruppe ausgewählt wird, die aus Zink, einer Zinklegierung, einer Zink-Aluminiumlegierung, einer Zink-Kochsalzlösung, einer wärmebehandelten Zinklegierungslösung und einer Kombination davon besteht.

7. Verfahren zur Herstellung einer korrosionsfesten Metallkomponentenbeschichtung nach Anspruch 3, wobei das Beschichtungsgemisch mit der Zink- oder Zinklegierungsoberfläche des Metallsubstrats reagiert, wobei eine chemische Bindung mit der Zink- oder Zinklegierungsoberfläche gebildet wird.

8. Verfahren zur Herstellung einer korrosionsfesten Metallkomponentenbeschichtung nach Anspruch 1 oder 2, wobei die erste Lösung umfasst:
nicht weniger als 4 und nicht mehr als 27 Prozent an Gewicht von Wasser; nicht weniger als 5 und nicht mehr als 27 Prozent an Gewicht der wenigstens einen Zink-Phosphatverbindung und
nicht weniger als 5 und nicht mehr als 27 Prozent an Gewicht der wenigstens einen Chromverbindung.

9. Verfahren zur Herstellung einer korrosionsfesten Metallkomponente nach Anspruch 1 oder 2, wobei die korrosionsfeste Metallkomponentenbeschichtung umfasst:
nicht weniger als 20 und nicht mehr als 95 Prozent an Gewicht der ersten Lösung; nicht weniger als 5 und nicht mehr als 12 Prozent an Gewicht der zweiten Lösung; und
nicht weniger als 5 und nicht mehr als 50 Prozent an Gewicht von Wasser.

10. Verfahren zur Herstellung einer korrosionsfesten Metallkomponentenbeschichtung nach Anspruch 1 oder 2, wobei das Beschichtungsgemisch einen pH-Wert von nicht größer als 3,5 hat.

11. Verfahren zur Herstellung einer korrosionsfesten Metallkomponente nach Anspruch 1 oder 2, wobei die wenigstens eine Chromverbindung eine dreiwertige Chromverbindung ist.

12. Verfahren zur Herstellung einer korrosionsfesten Metallkomponente nach Anspruch 11, wobei
die dreiwertige Chromverbindung aus der Gruppe ausgewählt wird, die aus Chromchlorid-Hydrat, Chrom-(III)-Kaliumsulfat, Chromhydroxid, Chrom-(III)-Fluorid, Chrom-(III)-Sulfat, Chrom-(III)-Sulfid, Chrom-(III)-Oxid, Chrom-(III)-2-ethylhexanoat, Chrom-(III)-Nitrid, Chromtricarbonyl und Gemischen davon besteht.

13. Verfahren zur Herstellung einer korrosionsfesten Metallkomponente nach Anspruch 1 oder 2, wobei die wenigstens eine Chromverbindung eine sechswertige Chromverbindung umfasst.

14. Verfahren zur Herstellung einer korrosionsfesten Metallkomponente nach Anspruch 13, wobei
die sechswertige Chromverbindung aus einer Gruppe ausgewählt wird, die aus Chrom-(VI)-Halogeniden, Chrom-(VI)-Hexafluorid, Chromylchlorid, Natriumchromat, Chrom-(VI)-Peroxid, Natriumchromat, Chrom-(VI)-Oxid, Dichromat, Kaliumchromat, Kalziumchromat, Bariumchromat, Chrom-(VI)-Oxid-Peroxid und Gemischen davon besteht.

15. Verfahren zur Herstellung einer korrosionsfesten Metallkomponente nach Anspruch 3, wobei der Schritt zum Aufbringen des Beschichtungsgemisches das Walzen des Beschichtungsgemisches auf die Metallkomponentenoberfläche umfasst.

16. Verfahren zur Herstellung einer korrosionsfesten Metallkomponente nach Anspruch 3, wobei der Schritt zum Aufbringen des Beschichtungsgemisches das Sprühen des Beschichtungsgemisches auf die Metallkomponentenoberfläche umfasst.

17. Verfahren zur Herstellung einer korrosionsfesten Metallkomponente nach Anspruch 3, wobei der Schritt zum Aufbringen des Beschichtungsgemisches das Eintauchen von wenigstens einem Teil des Metallsubstrats mit einer Zink- oder Zinklegierungsoberfläche in ein Bad aus dem Beschichtungsgemisch umfasst.

18. Verfahren zur Herstellung einer korrosionsfesten Metallkomponente nach Anspruch 3, wobei der Schritt zum Aufbringen des Beschichtungsgemisches des Weiteren das Füllen aller Leerstellen in der Zink- oder Zinklegierungsoberfläche mit dem Beschichtungsgemisch umfasst.

19. Verfahren zur Herstellung einer korrosionsfesten Metallkomponentenbeschichtung nach Anspruch 1 oder 2, wobei die korrosionsfeste Metallkomponentenbeschichtung einen pH-Wert von nicht weniger als 1,0 und nicht mehr als 2,5 hat.

20. Verfahren zur Herstellung einer korrosionsfesten Metallkomponentenbeschichtung nach Anspruch 1, 2 oder 3, wobei die korrosionsfeste Metallkomponentenbeschichtung elektrisch leitend ist.

21. Verfahren zur Herstellung einer korrosionsfesten Metallkomponentenbeschichtung nach Anspruch 1, 2 oder 3, wobei die korrosionsfeste Metallkomponentenbeschichtung wasserabweisend ist.

22. Verfahren zur Herstellung einer korrosionsfesten Metallkomponentenbeschichtung nach Anspruch 1, 2 oder 3, wobei die korrosionsfeste Metallkomponentenbeschichtung eine verbesserte Oberfläche für eine mit Zink oder mit einer Zinklegierung beschichteten Metallkomponente für die Haftung von Farbe bereitstellt.

23. Verfahren zur Herstellung einer korrosionsfesten Metallkomponentenbeschichtung nach Anspruch 1 oder 2, wobei die korrosionsfeste Metallkomponentenbeschichtung selbst reparierend ist.

24. Korrosionsfeste Metallkomponente mit einer korrosionsfesten Beschichtung, die durch ein Verfahren nach einem der Ansprüche 1 bis 23 erreicht werden kann.

25. Korrosionsfeste Metallkomponente, die umfasst:
eine Metallkomponente mit einer Zink- oder Zinklegierungsbeschichtung und
eine korrosionsfeste Beschichtung, die eine chemische Beständigkeit für mehr als 150 Stunden entsprechend den ASTM B117 Standards bereitstellt, wobei die Zink- oder Zinklegierungsbeschichtung des Metallsubstrats ein Gewicht von (0,04 oz/ft²) 12,20 g/m² hat, wobei die korrosionsfeste Beschichtung eine erste Lösung und eine zweite Lösung umfasst, die kombiniert werden, um eine gemischte wässrige Lösung zu bilden,
wobei die erste Lösung Wasser, wenigstens eine Zink-Phosphatverbindung und wenigstens eine Chromverbindung umfasst und
wobei die zweite Lösung Kaliumsilikat und Wasser umfasst.

26. Korrosionsfeste Metallkomponente nach Anspruch 25, wobei die korrosionsfeste Beschichtung des Weiteren wenigstens ein Acrylharz umfasst.

## Revendications

1. Un procédé pour fabriquer un revêtement de composé métallique résistant à la corrosion comprenant les étapes pour:
combiner de l'eau, au moins un composé de phosphate de zinc et au moins un composé de chrome pour former une première solution;
combiner séparément au moins du silicate de potassium avec de l'eau pour former une seconde solution;
combiner la première solution avec la seconde solution pour former un mélange de revêtement de composé métallique résistant à la corrosion pour l'application à un substrat métallique possédant une surface de zinc ou d'alliage de zinc pour former un revêtement sur le substrat métallique, le revêtement fournissant une resistance chimique pour au moins 150 heures en accord avec les standards ASTM BI 17 dans lesquels le revêtement de zinc ou d'alliage de zinc du substrat métallique a un poids de (0.04oz/ft²) 12.20g/m².

2. Un procédé pour fabriquer un revêtement de composé métallique résistant à la corrosion tel que décrit dans la revendication 1, comprenant en outre l'étape de combinaison du mélange de revêtement avec au moins une résine acrylique.

3. Un procédé pour fabriquer un revêtement de composé métallique résistant à la corrosion tel que décrit dans la revendication 1 ou 2, comprenant en outre l'étape d'application du mélange de revêtement à un substrat métallique possédant une surface de zinc ou d'alliage de zinc pour former un revêtement sur le substrat métallique.

4. Un procédé pour fabriquer un revêtement de composé métallique résistant à la corrosion tel que décrit dans la revendication 2 dans lequel au moins une résine acrylique a une valeur pH ne dépassant pas 3,5.

5. Un procédé pour fabriquer un revêtement de composé métallique résistant à la corrosion tel que décrit dans la revendication 3, comprenant en outre l'étape de chauffage du substrat métallique revêtu pour poursuivre la réaction entre le mélange de revêtement appliqué et la surface du substrat.

6. Un procédé pour fabriquer un revêtement de composé métallique résistant à la corrosion tel que décrit dans la revendication 3 dans lequel la surface de zinc ou d'alliage de zinc est sélectionnée parmi le groupe consistant de zinc, d'alliage de zinc, d'alliage de zinc-aluminum, de solution de zinc-saline, de solution d'alliage de zinc traitée de manière thermique et une combinaison de ceux-ci.

7. Un procédé pour fabriquer un revêtement de composé métallique résistant à la corrosion tel que décrit dans la revendication 3 dans lequel le mélange de revêtement réagit avec la surface de zinc ou d'alliage de zinc du substrat métallique formant un lien chimique avec la surface de zinc ou d'alliage de zinc.

8. Un procédé pour fabriquer un revêtement de composé métallique résistant à la corrosion tel que décrit dans la revendication 1 ou 2 dans lequel la première solution comprends:
au moins 4 et au plus 27 pour-cent en poids d'eau; au moins 5 et au plus 27 pour-cent en poids d'au moins un composé de phosphate de zinc; et
au moins 5 et au plus 27 pour-cent en poids d'au moins un composé de chrome.

9. Un procédé pour fabriquer un composé métallique résistant à la corrosion tel que décrit dans la revendication 1 ou 2, dans lequel le revêtement de composé métallique résistant à la corrosion comprends:
au moins 20 et au plus 95 pour-cent en poids de la première solution; au moins 5 et au plus 12 pour-cent en poids de la seconde solution; et
au moins 5 et au plus 50 pour-cent en poids d'eau.

10. Un procédé pour fabriquer un revêtement de composé métallique résistant à la corrosion tel que décrit dans la revendication 1 ou 2 dans lequel le mélange de revêtement a une valeur pH ne dépassant pas 3,5.

11. Un procédé pour fabriquer un composé métallique résistant à la corrosion tel que décrit dans la revendication 1 ou 2 dans lequel au moins un composé de chrome comprend un composé de chrome trivalent.

12. Un procédé pour fabriquer un composé métallique résistant à la corrosion tel que décrit dans la revendication 11 dans lequel
le composé de chrome trivalent est sélectionné parmi le groupe consistant d'hydrate de chlorure de chrome, de sulfate de potassium de chrome (III), d'hydroxyde de chrome, de fluorure de chrome (III), de sulfate de chrome (III), de sulfure de chrome (III), d'oxide de chrome (III), éthylhexanoate de chrome (III), de nitrure de chrome (III), de tricarbonyle de chrome et des mélanges de ceux-ci.

13. Un procédé pour fabriquer un composé métallique résistant à la corrosion tel que décrit dans la revendication 1 ou 2 dans lequel au moins un composé de chrome comprends un composé de chrome hexavalent.

14. Un procédé pour fabriquer un composé métallique résistant à la corrosion tel que décrit dans la revendication 13 dans lequel le composé de chrome hexavalent est sélectionné parmi le groupe consistant d'halogénure de chrome (VI), d'hexafluorure de chrome (VI), de chlorure de chromyle, de chromate de sodium, de peroxide de chrome (VI), de chromate de sodium, d'oxide de chrome (VI), de dichromate, de chromate de potassium, de chromate de calcium, de chromate de barium, de peroxide d'oxide de chrome (VI), et des mélanges de ceux-ci.

15. Un procédé pour fabriquer un composé métallique résistant à la corrosion tel que décrit dans la revendication 3 dans lequel l'étape d'application du mélange de revêtement comprends le laminage du mélange de revêtement sur la surface du composé métallique.

16. Un procédé pour fabriquer un composé métallique résistant à la corrosion tel que décrit dans la revendication 3 dans lequel l'étape d'application du mélange de revêtement comprends la pulvérisation du mélange de revêtement sur la surface du composé métallique.

17. Un procédé pour fabriquer un composé métallique résistant à la corrosion tel que décrit dans la revendication 3 dans lequel l'étape d'application du mélange de revêtement comprends la submersion d'au moins une portion du substrat métallique avec une surface de zinc ou d'alliage de zinc dans un bain du mélange de revêtement.

18. Un procédé pour fabriquer un composé métallique résistant à la corrosion tel que décrit dans la revendication 3 dans lequel l'étape d'application de la solution de mélange de revêtement comprends en outre de combler les vides dans la surface de zinc ou d'alliage de zinc avec la solution de mélange de revêtement.

19. Un procédé pour fabriquer un revêtement de composé métallique résistant à la corrosion tel que décrit dans la revendication 1 ou 2 dans lequel le revêtement de composé métallique résistant à la corrosion a une valeur pH d'au moins 1,0 et ne dépassant pas 2,5.

20. Un procédé pour fabriquer un revêtement de composé métallique résistant à la corrosion tel que décrit dans la revendication 1, 2, ou 3 dans lequel le revêtement de composé métallique résistant à la corrosion est conducteur d'électricité.

21. Un procédé pour fabriquer un revêtement de composé métallique résistant à la corrosion tel que décrit dans la revendication 1, 2, ou 3 dans lequel le revêtement de composé métallique résistant à la corrosion est hydrofuge.

22. Un procédé pour fabriquer un revêtement de composé métallique résistant à la corrosion tel que décrit dans la revendication 1, 2, ou 3 dans lequel le revêtement de composé métallique résistant à la corrosion fournit une surface améliorée pour un composé métallique revêtu de zinc ou d'alliage de zinc pour l'adhésion aux peintures.

23. Un procédé pour fabriquer un revêtement de composé métallique résistant à la corrosion tel que décrit dans la revendication 1 ou 2 dans lequel le revêtement de composé métallique résistant à la corrosion est auto-réparant.

24. Un composé métallique résistant à la corrosion ayant un revêtement résistant à la corrosion pouvant être obtenu par le procédé tel que décrit dans n'importe laquelle des revendications 1 à 23.

25. Un composé métallique résistant à la corrosion comprenant:
un composé métallique ayant un revêtement de zinc ou d'alliage de zinc; et
un revêtement résistant à la corrosion fournissant une resistance chimique pour plus de 150 heures en accord aves les standards ASTM BI 17 dans lequel le revêtement de zinc ou d'alliage de zinc du substrat métallique a un poids de (0.04oz/ft²) 12.20g/m², dans lequel le revêtement résistant à la corrosion comprend une première solution et une seconde solution, combinées pour former une solution aqueuse mélangée,
dans lequel la première solution comprends de l'eau, au moins un composé de phosphate de zinc et au moins un composé de chrome; et
dans lequel la seconde solution comprends du silice de potassium et de l'eau.

26. Un composé métallique résistant à la corrosion tel que décrit dans la revendication 25 dans lequel le revêtement résistant à la corrosion comprends en outre au moins une résine acrylique.
